# FASCICULE DE BREVET EUROPEEN

(11) **EP 3 325 719 B1**
(45) Date de publication et mention de la délivrance du brevet: **21.08.2019**
(21) Numéro de dépôt: 16750956.1
(22) Date de dépôt: 13.07.2016
(51) Int. Cl.: E01B 29/42, B23K 23/00

(54) **PIECE DE FOND D'UN MOULE DE SOUDURE DE RAILS METALLIQUES**
BASISTEIL EINER FORM ZUM VERSCHWEISSEN VON METALLSCHIENEN
BASE PART OF A MOLD FOR WELDING METAL RAILS

(30) Priorité: 17.07.2015 FR 1556778
(43) Date de publication de la demande: 30.05.2018
(73) Titulaire: Pandrol, 59 590 Raismes (FR)
(72) Inventeur: WINIAR, Lionel, 59790 Ronchin (FR); BORDERY, Pierre, 59690 Vieux-Condé (FR)
(74) Mandataire: Regimbeau
(86) Numéro de dépôt international: PCT/FR2016/051805
(87) Numéro de publication internationale: WO 2017/013332

(56) Documents cités:
- FR-A1- 2 890 668
- FR-A1- 2 923 740

## Description

### DOMAINE DE L'INVENTION

La présente invention se rapporte à une pièce de fond d'un moule de soudure aluminothermique de rails métalliques.

Elle concerne également un moule qui en fait usage, ainsi qu'un procédé de soudage faisant usage d'un moule utilisant une telle pièce de fond.

### ARRIERE PLAN TECHNOLOGIQUE DE L'INVENTION

Le document FR 2 890 668 A divulgue une pièce de fond d'un moule de soudure aluminothermique de rails métalliques selon le préambule de la revendication 1.

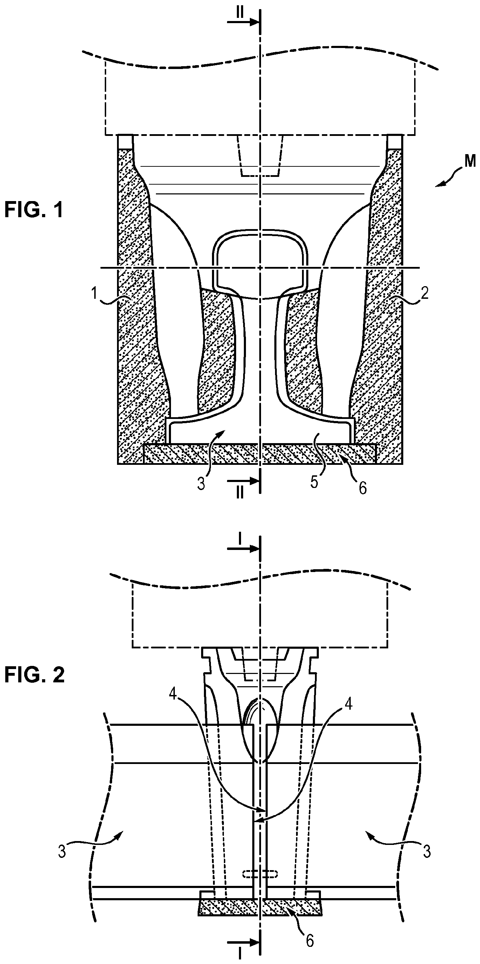

Aux figures 1 et 2 annexées est représenté un moule M selon l'état de la technique comportant trois pièces 1, 2 et 6, le moule M étant vu à l'état assemblé sur les abouts 4 de deux rails 3 de chemin de fer, à souder l'un à l'autre. Ces vues sont reprises de la demande FR 2 923 740 au nom de la présente demanderesse.

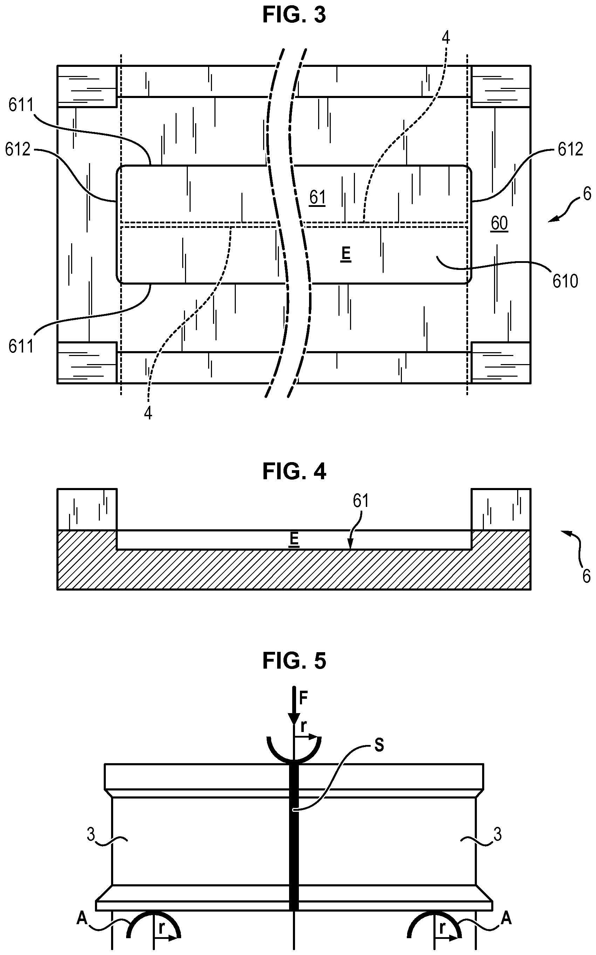

Ces abouts 4 reposent sur une pièce de fond 6 représentée en détail aux figures 3 et 4.

La pièce de fond 6 ou "briquette" s'inscrit généralement dans un parallélépipède rectangle et présente une face supérieure 60 de réception et des supports du patin desdits rails, cette face supérieure présentant une empreinte en creux 61 comportant un fond 610, deux flancs longitudinaux opposés 611, ainsi que deux flancs transversaux opposés 612. Ainsi conformée, l'empreinte a aussi la forme d'un parallélépipède rectangle.

Lors du moulage, le matériau de soudure s'introduit non seulement entre les abouts de rails 4, mais également dans l'espace libre E délimité par l'empreinte 6 précitée.

Cela se traduit, sur le produit fini, par une région en saillie de la face inférieure des abouts 4 réunis l'un à l'autre. Cette saillie n'est pas handicapante dans la mesure où les rails vont reposer sur des traverses.

L'homologation d'un procédé de soudage par aluminothermie nécessite de satisfaire aux exigences d'un cahier des charges. Ce cahier des charges impose le respect de nombreux critères relatifs notamment à l'analyse chimique, la dureté, l'analyse des défauts, la largeur des zones fondues, la tenue en fatigue, la tenue en flexion, etc.

Selon l'organisme d'homologation, les exigences relatives à ces différents critères peuvent varier.

Ainsi, dans certains pays, le critère le plus difficile à respecter est la tenue en flexion (3 points).

A la figure 5 est représenté schématiquement un test de flexion réalisé sur les rails. Ainsi que cela est visible, le couple de rails 3 soudés l'un à l'autre est en appui par le patin sur deux surfaces cylindriques A de part et d'autre de la soudure et une force F est appliquée sur la tête de rail, à la verticale de la soudure S. Selon la norme EN14730-1 (annexe F) le rayon r d'application de la charge et d'appui de l'échantillon est compris entre 25 et 70 mm, la longueur minimale de l'échantillon est de 1150 mm et le taux de charge est inférieur ou égal à 60 kN/s.

Ainsi, pour les rails référencés JIS60A HH (une nuance traitée thermiquement, de dureté élevée), l'organisme d'homologation impose un déplacement à rupture d'au moins 10 mm. L'expérience montre que, quels que soient les développements réalisés, cette valeur est difficile à atteindre, comme cela apparaît dans le tableau suivant.

| Rail | Grade | Essai de Flexion lente Patin en tension | | Essai de Flexion lente Tête en tension | |
|---|---|---|---|---|---|
| | | Déflexion minimale | Déflexion maximale | Déflexion minimale | Déflexion maximale |
| 50N | D | 10 mm | 800 kN | 13 mm | 800 kN |
| 50N | 345 | 10 mm | 950 kN | 10 mm | 950 kN |
| 60K | D | 10 mm | 1100 kN | 13 mm | 1100 kN |
| 60K | 345 | 10 mm | 1250 kN | 10 mm | 1250 kN |

Le grade correspond à la nuance de la soudure. Ainsi, le Grade 345 correspond à la nuance utilisée pour un rail à tête durcie (HH, acronyme du terme anglo-saxon « Head Hardened »).

Pour améliorer la tenue en flexion, la recherche s'est portée sur l'analyse des faciès, c'est à dire des zones de rupture et des points d'initiation des ruptures sur les soudures cassées en flexion.

Les morphologies et les tailles des zones fondues au patin ont été observées. Les géométries et les dimensions des bossages de moules et au final des bossages des soudures ont été analysées.

L'objectif général était d'éviter les singularités géométriques qui pénalisent les propriétés mécaniques et peuvent entrainer des défauts métallurgiques eux-mêmes pénalisants.

Ainsi, contre toute attente, la présente demanderesse a conçu une géométrie particulière de pièce de fond qui assure une meilleure tenue aux efforts de flexion.

### RESUME DE L'INVENTION

L'invention propose à cet effet une pièce de fond d'un moule de soudure aluminothermique de rails métalliques, qui s'inscrit généralement dans un parallélépipède rectangle et qui présente une face supérieure de réception du patin desdits rails, cette face supérieure présentant une empreinte en creux comportant un fond, deux flancs longitudinaux opposés, ainsi que deux flancs transversaux opposés, caractérisée par le fait que :
- lesdits flancs longitudinaux présentent chacun une région intermédiaire encadrée par deux régions d'extrémité ;
- ces régions d'extrémité se situent dans le même plan, tandis que la région intermédiaire présente un profil courbe, de concavité dirigée vers le flanc opposé.

De manière avantageuse, ladite région intermédiaire se raccorde progressivement auxdites régions d'extrémité, sans angle vif.

Par ailleurs, le fond de l'empreinte se raccorde auxdits flancs longitudinaux selon un profil en courbe, sans angle vif.

Selon des caractéristiques considérées seules ou en combinaison :
- ledit profil en courbe présente un rayon de courbure compris entre 50 et 100 mm ;
- le ratio entre la longueur de la région intermédiaire et la longueur d'un flanc longitudinal est compris entre 30 et 50% ;
- le ratio entre la distance entre les flancs longitudinaux dans les régions d'extrémité et la distance maximale entre les flancs longitudinaux dans la région intermédiaire est compris entre 75 et 90%.

L'invention concerne également un moule de soudure aluminothermique de rails métalliques, qui comprend deux demi-moules de formes symétriques et mutuellement jointifs, et une pièce de fond sur laquelle prennent appui chacun desdits demi-moules, caractérisé par le fait que ladite pièce de fond est telle que décrite ci-dessus.

Selon un mode de réalisation, la pièce de fond est constituée de deux parties distinctes qui sont symétriques l'une de l'autre par rapport à un plan parallèle auxdits flancs transversaux.

L'invention concerne également un moule de soudure aluminothermique de rails métalliques, qui comprend deux demi-moules de formes symétriques et mutuellement jointifs, caractérisé par le fait qu'il comporte une pièce de fond telle que définie ci-dessus, chaque partie étant d'une pièce avec un demi-moule.

L'invention porte enfin sur un procédé de soudure aluminothermique de rails métalliques, caractérisé par le fait que l'on fait usage d'un moule tel que défini plus haut.

A partir des analyses réalisées, une nouvelle géométrie de pièce de fond (ou "briquette") a été testée. Le premier objectif était d'obtenir une continuité entre la géométrie de la zone fondue au patin et la géométrie de la briquette. Le second objectif était d'adoucir le raccord entre le bossage sous patin de la soudure et les rails.

Avec une briquette selon l'état de la technique dont la géométrie du bossage est rectangulaire, les déplacements à rupture des soudures cassées en flexion 3 points restent dans une moyenne de 9 à 11 mm avec de nombreux résultats inférieurs à 10 mm.

Avec une pièce de fond selon l'invention, les déplacements à rupture des soudures cassées en flexion 3 points sont dans une moyenne de 10 à 12 mm avec parfois des résultats supérieurs à 12mm.

### BREVE DESCRIPTION DES DESSINS

D'autres caractéristiques et avantages de l'invention apparaîtront à la lecture de la description suivante d'un mode de réalisation préféré de l'invention. Cette description est faite en référence aux dessins annexés dans lesquels :
- la figure 1, comme déjà commenté plus haut, est une vue d'un moule selon l'état de la technique, comportant trois pièces, le moule étant vu à l'état assemblé sur les abouts de deux rails de chemin de fer à souder l'un à l'autre, et en coupe par rapport à un plan transversal de symétrie entre ces abouts, tels que représentés selon le plan de coupe I-I de la figure 2 ;
- la figure 2 est une vue du moule de la figure 1 en coupe selon un plan longitudinal de symétrie commun aux deux abouts de rails, quant à eux représentés en élévation selon le plan II-II de la figure 1 ;
- la figure 3 est une vue de dessus d'une pièce de fond, toujours selon l'état de la technique, faisant partie du moule des figures précédentes ;
- la figure 4 est une vue en coupe longitudinale de la pièce de fond de la figure 3 ;
- la figure 5 est un schéma simplifié d'un test de flexion lente, réalisé sur deux rails soudés l'un à l'autre au moyen d'un moule selon les figures 1 et 2 ;
- les figures 6 à 9 sont des vues, respectivement de dessus, de côté, selon le plan de coupe longitudinal VIII-VII de la figure 6 et selon le plan de coupe transversal IX-IX de la figure 6 d'une pièce de fond conforme à la présente invention ;
- la figure 10 est une vue analogue à la figure 6, d'une variante de réalisation de la pièce de fond ;
- enfin, la figure 11 est une vue simplifiée de dessus et en coupe transversale d'un moule qui fait usage de deux "demi-pièces de fond".

### DESCRIPTION DETAILLEE DE L'INVENTION

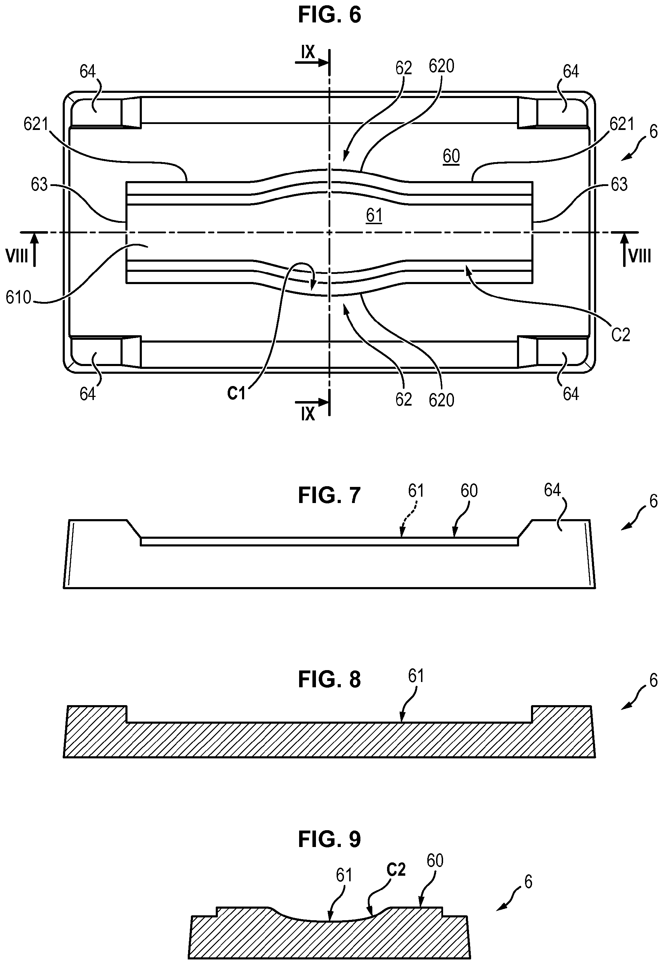

En se reportant tout particulièrement à la figure 6, on constate que la pièce de fond 6 de l'invention présente la même allure générale que celle appartenant à l'état de la technique et représentée à la figure 3.

Elle est constituée d'un matériau réfractaire rigide (par exemple sable + additif).

Elle a l'allure générale d'une briquette et s'inscrit dans un parallélépipède rectangle.

Sa face supérieure plane d'appui est référencée 60 et comporte à chaque angle un plot 64 qui s'élève perpendiculairement à celle-ci. Ces plots, déjà existants dans les pièces de fond connues, ont pour fonction essentielle de permettre de caler la pièce de fond par rapport aux rails à souder (voir la figure 3 dans laquelle les deux rails sont représentés en traits interrompus). Dans ces conditions, l'écartement entre les plots 64 situés le long du même grand côté de la pièce 6 correspond à la largeur des rails à souder, au niveau de leur patin 5.

L'empreinte 61 est centrée par rapport à la face 60. Son fond 610 est plan et parallèle à la face 60. Elle est délimitée par deux grands flancs longitudinaux 62 et deux petits flancs transversaux 63 qui se raccordent au fond 610.

Conformément à l'invention, chaque flanc longitudinal 62 présente une région intermédiaire 620 qui est encadrée par deux régions d'extrémité 621.

A titre indicatif, chacune de ces trois régions s'étend approximativement sur un tiers de la longueur.

Les régions d'extrémité 621 se situent dans le même plan, ce qui signifie que si elles étaient contiguës, elles seraient dans la continuité l'une de l'autre.

La région intermédiaire 620 présente, quant à elle, un profil courbe C1 de concavité dirigée vers le flanc opposé 62. L'écartement mutuel entre les deux régions intermédiaires 620 est donc plus grand que l'écartement mutuel entre deux régions d'extrémité 621 en vis-à-vis.

A titre indicatif, le ratio entre la longueur de la région intermédiaire 620 et la longueur d'un flanc longitudinal 62 peut être compris entre 30 et 50%.

Par ailleurs, le ratio entre la distance entre les flancs longitudinaux 62 dans les régions d'extrémité 621 et la distance maximale entre lesdits flancs longitudinaux 62 dans la région intermédiaire 620 peut être compris entre 75 et 90%. Par exemple, la distance entre les régions 621 en vis-à-vis peut être comprise entre 30 et 50 mm tandis que la distance maximale entre les flancs dans la région intermédiaire peut être comprise entre 40 et 60 mm.

La région intermédiaire 620 se raccorde aux régions d'extrémité 621 de manière douce et progressive, sans aucun angle vif.

Conformément à un mode de réalisation préférentiel, le fond 610 de l'empreinte 61 se raccorde aux flancs longitudinaux 62 selon un second profil courbe C2, sans angle vif. A titre indicatif, le rayon de courbure C2 peut être compris entre 50 et 100 mm. Selon la profondeur souhaitée de l'empreinte 61, le fond 610 peut comprendre une portion plane ou courbe.

D'autre part, la face supérieure 60 se raccorde aux flancs 62 avec un rayon de courbure qui peut être typiquement compris entre 2 et 15 mm.

Les petits flancs transversaux 63 restent inchangés, ce qui signifie qu'ils s'étendent perpendiculairement au fond 61.

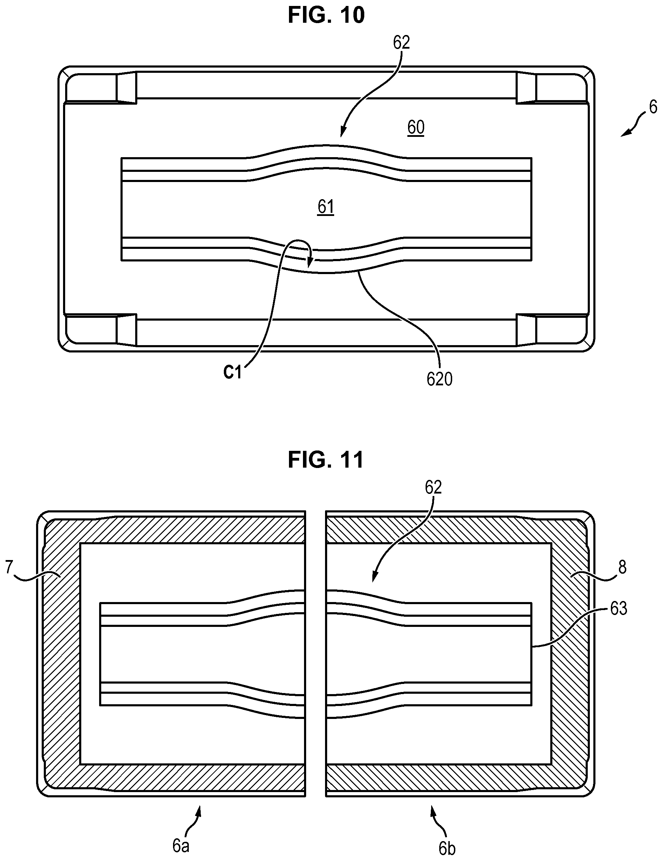

A la figure 10 est représentée une autre pièce de fond 6 qui a la particularité de présenter un profil C1 de plus grand rayon que celui qui apparaît à la figure 6. Malgré ce changement de rayon, la pièce de fond donne entièrement satisfaction sur le plan du cahier des charges.

Une telle pièce de fond est destinée à être utilisée au sein d'un moule M qui comprend deux demi-moules 1 et 2 de forme symétriques et mutuellement jointives, comme le montre la figure 1. Dans ce cas, chacun des demi-moules prend appui sur la pièce de fond. Ledit moule est donc en trois parties : les deux demi-moules et la pièce de fond.

Dans une variante de réalisation, la pièce de fond 6 n'est pas constituée d'une seule et unique pièce distincte des demi-moules, mais se compose de deux parties 6a et 6b intégrées respectivement à l'un des demi-moules. Lesdites parties 6a, 6b sont symétriques l'une par rapport à l'autre selon un plan parallèle aux flancs transversaux 63, ce plan correspondant au plan de symétrie longitudinale des rails à souder.

Dans ce cas, qui est représenté à la figure 11, le moule est en deux parties, à savoir les deux demi-moules de formes symétriques et mutuellement jointifs, chaque demi-moule étant d'une seule pièce avec une demi-pièce de fond correspondant à la moitié de la pièce de fond décrite plus haut (la jonction entre les deux demi-pièces de fond étant dans le plan de symétrie longitudinale des rails).

Des exemples de tels moules sont décrits notamment dans les documents US 6 125 913, FR 2 434 678 et US 4 250 944.

A la figure 11, la demi-pièce de fond 6a fait partie intégrante du demi-moule 7, tandis que la demi-pièce de fond 6b fait partie intégrante du demi-moule 8.

La mise en oeuvre d'un procédé de soudure aluminothermique de rails métallique est faite de manière tout à fait classique à l'aide d'un moule comportant une pièce de fond conforme à la présente invention.

La présente pièce de fond permet d'adoucir le raccord entre les bossages sous patin de la soudure et les rails. Grâce à elle, on évite les singularités géométriques qui pénalisent les propriétés mécaniques et qui peuvent entraîner des défauts métallurgiques eux-mêmes pénalisants.

Enfin, les déplacements à rupture des soudures cassées en flexion trois points sont relativement améliorés.

## Revendications

1. Pièce de fond (6) d'un moule (M) de soudure aluminothermique de rails métalliques (3), qui s'inscrit généralement dans un parallélépipède rectangle et qui présente une face supérieure (60) de réception du patin (5) desdits rails (3), cette face supérieure (60) présentant une empreinte en creux (61) comportant un fond (610), deux flancs longitudinaux opposés (62), ainsi que deux flancs transversaux opposés (63),
- lesdits flancs longitudinaux (62) présentant chacun une région intermédiaire (620) encadrée par deux régions d'extrémité (621), **caractérisée par le fait que**,
- ces régions d'extrémité (62) se situent dans le même plan, tandis que la région intermédiaire (620) présente un profil courbe (C1), de concavité dirigée vers le flanc opposé (62).

2. Pièce de fond selon la revendication 1, **caractérisée par le fait que** ladite région intermédiaire (620) se raccorde progressivement auxdites régions d'extrémité (621), sans angle vif.

3. Pièce de fond selon l'une des revendications 1 ou 2, **caractérisée par le fait que** le fond (610) de l'empreinte (61) se raccorde auxdits flancs longitudinaux (620) selon un profil en courbe (C2), sans angle vif.

4. Pièce de fond selon la revendication 3, **caractérisé en ce que** ledit profil en courbe (C2) présente un rayon de courbure compris entre 50 et 100 mm.

5. Pièce de fond selon l'une des revendications précédentes, **caractérisée en ce que** le ratio entre la longueur de la région intermédiaire (620) et la longueur d'un flanc longitudinal (62) est compris entre 30 et 50%.

6. Pièce de fond selon l'une des revendications précédentes, **caractérisée en ce que** le ratio entre la distance entre les flancs longitudinaux (62) dans les régions d'extrémité (621) et la distance maximale entre les flancs longitudinaux (62) dans la région intermédiaire (620) est compris entre 75 et 90%.

7. Pièce de fond selon l'une des revendications précédentes, **caractérisée par le fait qu'**elle est constituée de deux parties distinctes (6a, 6b) qui sont symétriques l'une de l'autre par rapport à un plan parallèle auxdits flancs transversaux (63).

8. Moule (M) de soudure aluminothermique de rails métalliques, qui comprend deux demi-moules (1, 2) de formes symétriques et mutuellement jointifs, et une pièce de fond (6) sur laquelle prennent appui chacun desdits demi-moules (1, 2), **caractérisé par le fait que** ladite pièce de fond (6) est conforme à l'une des revendications 1 à 6.

9. Moule de soudure aluminothermique de rails métalliques, qui comprend deux demi-moules (7, 8) de formes symétriques et mutuellement jointifs, **caractérisé par le fait qu'**il comporte une pièce de fond (6a, 6b) selon la revendication 7, chaque partie (6a, 6b) étant d'une pièce avec un demi-moule (7, 8).

10. Procédé de soudure aluminothermique de rails métalliques, **caractérisé par le fait que** l'on fait usage d'un moule (M) selon l'une des revendications 8 ou 9.

## Patentansprüche

1. Bodenteil (6) einer Form (M) zum aluminothermischen Schweißen von Metallschienen (3), das sich allgemein in ein rechtwinkliges Parallelepiped einfügt und das eine obere Seite (60) zum Aufnehmen des Fußes (5) der Schienen (3) aufweist, wobei diese obere Seite (60) eine hohle Vertiefung (61) aufweist, die einen Boden (610), zwei gegenüberliegende Längsflanken (62), sowie zwei gegenüberliegende Querflanken (63) umfasst, wobei die Längsflanken (62) jede einen Zwischenbereich (620) aufweisen, der von zwei Endbereichen (621) eingerahmt wird, **dadurch gekennzeichnet, dass** diese Endbereiche (62) in derselben Ebene liegen, wohingegen der Zwischenbereich (620) ein gekrümmtes Profil (C1) mit zur gegenüberliegenden Flanke (62) gerichteter Konkavität aufweist.

2. Bodenteil nach Anspruch 1, **dadurch gekennzeichnet, dass** der Zwischenbereich (620) ohne spitzen Winkel zunehmend in die Endbereiche (621) übergeht.

3. Bodenteil nach einem der Ansprüche 1 oder 2, **dadurch gekennzeichnet, dass** der Boden (610) der Vertiefung (61) gemäß einem gekrümmten Profil (C2) ohne spitzen Winkel in die Längsflanken (620) übergeht.

4. Bodenteil nach Anspruch 3, **dadurch gekennzeichnet, dass** das gekrümmte Profil (C2) einen Krümmungsradius im Bereich zwischen 50 und 100 mm aufweist.

5. Bodenteil nach einem der vorstehenden Ansprüche, **dadurch gekennzeichnet, dass** das Verhältnis zwischen der Länge des Zwischenbereichs (620) und der Länge einer Längsflanke (62) im Bereich zwischen 30 und 50 % liegt.

6. Bodenteil nach einem der vorstehenden Ansprüche, **dadurch gekennzeichnet, dass** das Verhältnis zwischen dem Abstand zwischen den Längsflanken (62) in den Endbereichen (621), und dem maximalen Abstand zwischen den Längsflanken (62) im Zwischenbereich (620) im Bereich zwischen 75 und 90 % liegt.

7. Bodenteil nach einem der vorstehenden Ansprüche, **dadurch gekennzeichnet, dass** es aus zwei getrennten Teilen (6a, 6b) besteht, die auf eine zu den Querflanken (63) parallele Ebene bezogen zueinander symmetrisch sind.

8. Form (M) zum aluminothermischen Schweißen von Metallschienen, die zwei Formhälften (1, 2) von symmetrischer und aneinanderpassender Gestalt, und ein Bodenteil (6) umfasst, an dem jede der Formhälften (1, 2) aufliegt, **dadurch gekennzeichnet, dass** das Bodenteil (6) einem der Ansprüche 1 bis 6 entspricht.

9. Form zum aluminothermischen Schweißen von Metallschienen, die zwei Formhälften (7, 8) von symmetrischer und aneinanderpassender Gestalt umfasst, **dadurch gekennzeichnet, dass** sie ein Bodenteil (6a, 6b) nach Anspruch 7 umfasst, wobei jeder Teil (6a, 6b) mit einer Formhälfte (7, 8) einstückig ist.

10. Verfahren zum aluminothermischen Schweißen von Metallschienen, **dadurch gekennzeichnet, dass** eine Form (M) nach einem der Ansprüche 8 oder 9 verwendet wird.

## Claims

1. A base part (6) of a mold (M) for aluminothermic welding of metallic rails (3), which is generally inscribed in a rectangular parallelepiped and which has an upper face (60) for receiving the foot (5) of said rails (3), this upper face (60) having a hollow cavity (61) comprising a base (610), two opposite longitudinal flanks (62), as well as two transverse opposite flanks (63), said longitudinal flanks (62) each having an intermediate region (620) flanked by two end regions (621), **characterized in that** these end regions (62) are located in the same plane, whereas the intermediate region (620) has a curved profile (C1), of concavity directed towards the opposite flank (62).

2. The base part according to claim 1, **characterized in that** said intermediate region (620) connects progressively to said end regions (621), without acute angle.

3. The base part according to any of claims 1 or 2, **characterized in that** the base (610) of the cavity (61) connects to said longitudinal flanks (620) according to a curved profile (C2), without acute angle.

4. The base part according to claim 3, **characterized in that** said curved profile (C2) has a radius of curvature between 50 and 100 mm.

5. The base part according to any of the preceding claims, **characterized in that** the ratio between the length of the intermediate region (620) and the length of a longitudinal flank (62) is between 30 and 50%.

6. The base part according to any of the preceding claims, **characterized in that** the ratio between the distance between the longitudinal flanks (62) in the end regions (621) and the maximum distance between the longitudinal flanks (62) in the intermediate region (620) is between 75 and 90%.

7. The base part according to any of the preceding claims, **characterized in that** it is constituted by two separate portions (6a, 6b) which are symmetrical to each other relative to a plane parallel to said transverse flanks (63).

8. A mold (M) for aluminothermic welding of metallic rails, which comprises two half-molds (1, 2) of symmetrical and mutually adjoining forms, and a base part (6) on which each of said half-molds (1, 2) is supported, **characterized in that** said base part (6) is according to any of claims 1 to 6.

9. A mold for aluminothermic welding of metallic rails, which comprises two half-molds (7, 8) of symmetrical and mutually adjoining forms, **characterized in that** it comprises a base part (6a, 6b) according to claim 7, each portion (6a, 6b) being integral with a half-mold (7, 8).

10. A method for aluminothermic welding of metallic rails, **characterized in that** use is made of a mold (M) according to any of claims 8 or 9.
